(19) Europäisches Patentamt

European Patent Office

Office européen des brevets

(11) **EP 2 901 536 B1**

(12) **EUROPEAN PATENT SPECIFICATION**

(45) Date of publication and mention
of the grant of the patent:
**09.01.2019 Bulletin 2019/02**

(21) Application number: **13783865.2**

(22) Date of filing: **30.09.2013**

(51) Int Cl.:
*H02J 3/38* *(2006.01)*     *H02J 3/32* *(2006.01)*
*H02J 3/24* *(2006.01)*     *H02J 3/00* *(2006.01)*

(86) International application number:
**PCT/EP2013/070362**

(87) International publication number:
**WO 2014/049173 (03.04.2014 Gazette 2014/14)**

(54) **METHOD FOR OPERATING AN ENERGY STORAGE ENTITY AND AN ENERGY STORAGE SYSTEM**

VERFAHREN ZUM BETREIBEN EINER ENERGIESPEICHEREINHEIT UND EINES ENERGIESPEICHERSYSTEMS

PROCÉDÉ D'EXPLOITATION D'UNE ENTITÉ DE STOCKAGE D'ÉNERGIE ET D'UN SYSTÈME DE STOCKAGE D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2012 EP 12186642**
**04.10.2012 EP 12187263**

(43) Date of publication of application:
**05.08.2015 Bulletin 2015/32**

(73) Proprietor: **NEC Corporation**
**Tokyo 108-8001 (JP)**

(72) Inventors:
• **WEN, Haofu**
**Hong Kong CYC 615 (CN)**

• **SCHUELKE, Anett**
**69251 Gaiberg (DE)**
• **BODET, Cédric**
**81825 München (DE)**
• **ETINSKI, Maja**
**Belgrad, 11 000 (RS)**

(74) Representative: **Patent- und Rechtsanwälte**
**Ullrich & Naumann**
**PartG mbB**
**Schneidmühlstrasse 21**
**69115 Heidelberg (DE)**

(56) References cited:
**EP-A1- 1 642 764**     **US-A1- 2011 222 320**
**US-A1- 2011 291 479**     **US-A1- 2012 223 670**

**Description**

The present invention relates to a method for operating an energy storage entity, preferably a battery-based energy storage entity, wherein the energy storage entity is connected to at least one energy load and at least one energy source, wherein energy fluctuations including fluctuations in energy generation of the energy source and/or in energy load and/or disbalances between energy load and energy generation are at least partly balanced by the energy storage entity, wherein for balancing charging and/or discharging power rates of the energy storage entity are controlled according to a control function dependent of at least one operational parameter including the state-of-charge, wherein at least three operational states are provided by the energy storage entity, including a charging oriented state, a discharging oriented state, and a neutral state, wherein the charging oriented state is defined such that the controlled discharging power rate is below the maximum discharging power rate and wherein the controlled charging power rate is equal to the maximum charging power rate, the discharging oriented state is defined such that the controlled charging power rate is below the maximum charging power rate and wherein the controlled discharging power rate is equal to the maximum discharging power rate.

The present invention further relates to an energy storage system, to perform the method according to one of the claims 1-10, with an energy storage entity, preferably a battery-based energy storage entity, wherein the energy storage entity is connected to at least one energy load and at least one energy source, wherein energy fluctuations including fluctuations in energy generation of the energy source and/or in energy load and/or disbalances between energy load and energy generation are at least partly balanced by the energy storage entity, said system comprising controlling means, connected to the energy storage entity, operable to control charging and/or discharging power rates of the energy storage entity according to a control function dependent of at least one operational parameter including the state-of-charge, wherein said energy storage entity is adapted to provide at least three operational states including a charging oriented state, a discharging oriented state, and a neutral state, for balancing and wherein the charging oriented state is defined such that the controlled discharging power rate is below the maximum discharging power rate and wherein the controlled charging power rate is equal to the maximum charging power rate, and wherein the discharging oriented state is defined such that the controlled charging power rate is below the maximum charging power rate and wherein the controlled discharging power rate is equal to the maximum discharging power rate.

Although applicable to energy storage entities in general the present invention will be described to battery-based electric energy storage entities.

Although deployable or operable in general to or with any system the present invention will be described deployed in and operating with energy distribution grids and respective grid segments.

Due to the more and more increasing use of renewable energy resources like wind power and solar power an integration of these renewable energies as well as large-scales stochastic loads is a great challenge. The ongoing transition of the power grids worldwide, for example European goals for 2020 with up to 20% and for 2050 even 100% of regenerative energies in the power mix requires an enhanced elastic capacity of the power grid to balance supply and demands in order to provide stable power quality as well as to provide stable and reliable power supply at all times. Therefore local control and operation of such power grids is one of the important aspects. For example a feed-in of a local energy supply, for example via solar power panels mounted on buildings, small-to-medium scaled wind power, bioplants, etc. are more and more used and increase instability of the power supply respectively the power grid in general. Fluctuating resources like solar and wind energy require an increased level of control strategies to balance their fluctuation characteristics against the also stochastic nature of loads.

Due to the high penetration of fluctuating renewable sources and limited forecasting on small-scaled levels, there is a lot of stress on the control capabilities for supply-demand balancing due to return power flow at links between the different hierarchical levels, i.e. different substation levels as local demand might exceed temporarily and/or systematically. Conventionally local small-to-medium scaled energy storage systems ESS are used for locally managing supply and demand in a distributed manner suitable for smaller grid segments within the distribution grid. One of the drawbacks however is that this causes stress for energy storage entities serving the needed power and energy balancing capacities, in particular since charging and discharging cycles are limited, for example in case a battery is used.

Document EP 1642764 A1 discloses the operation of an energy storage in a hybrid car wherein the discharge and charge power of the energy storage is controlled in dependence of the state of charge (SOC) of the energy storage.

Document US 2012/0223670 A1 discloses a power control device to supply stable power to a load wherein discharging and charging current is determined based on the SOC or the SOH.

Document US 2011/0291479 A1 discloses a method and a system to control an energy storage based on charging and discharging modes which are dependent on the SOC of the energy storage is therefore an objective of the invention to provide a method for operating an energy storage entity and an energy storage system minimizing stress for an energy storage entity.

It is a further objective of the present invention to provide a method for operating an energy storage entity and an energy storage system enabling a reduction of costs, in particular operational costs, of an energy storage entity.

It is a further objective of the present invention to provide a method for operating an energy storage entity and an energy storage system enabling a higher flexibility in terms of controlling respectively of operating an energy storage entity.

It is an even further objective of the present invention to provide a method for operating an energy storage entity and an energy storage system which are easy to implement and enable a sufficient balancing of energy loads and energy sources. The aforementioned objectives are accomplished by a method of claim 1 and a system of claim 11.

The invention is defined by the independent claims 1 and 11. Preferred embodiments are defined in the dependent claims. In claim 1 a method for operating an energy storage entity is defined, preferably a battery-based energy storage entity, wherein the energy storage entity is connected to at least one energy load and at least one energy source, wherein energy fluctuations including fluctuations in energy generation of the energy source and/or in energy load and/or disbalances between energy load and energy generation are at least partly balanced by the energy storage entity, wherein for balancing charging and/or discharging power rates of the energy storage entity are controlled according to a control function dependent of at least one operational parameter including the state-of-charge, wherein at least three operational states are provided by the energy storage entity, including a charging oriented state, a discharging oriented state, and a neutral state, wherein the charging oriented state is defined such that the controlled discharging power rate is below the maximum discharging power rate and wherein the controlled charging power rate is equal to the maximum charging power rate, the discharging oriented state is defined such that the controlled charging power rate is below the maximum charging power rate and wherein the controlled discharging power rate is equal to the maximum discharging power rate.

According to claim 1 the method is characterized in that the neutral state is represented by a single SOC-turn point, wherein the SOC-turn point is defined as control point at which a power rate changes its behaviour from the maximum power rate to a state of charge function based on a certain energy storage information, wherein the single SOC-turn point is defined such that the controlled discharging power rate equals the maximum discharging power rate and the controlled charging power rate equals the maximum charging power rate, or the neutral state is represented by an overlapping region of the charging oriented state and the discharging oriented state, said overlapping region defined by SOC-turn points of the charging and discharging oriented state, wherein the charging and discharging oriented SOC-turn points are different from each other, and wherein operation periods are defined and the SOC-turn points are selected according to the usage of the energy storage entity during the next operation period, and wherein the energy storage entity is controlled such that the neutral state as operational state for the energy storage entity is preferred.

In claim 11 an energy storage system, to perform the method according to one of the claims 1-12, is defined with an energy storage entity, preferably a battery-based energy storage entity, wherein the energy storage entity is connected to at least one energy load and/or at least one energy source, wherein energy fluctuations including fluctuations in energy generation of the energy source and/or in energy load and/or disbalances between energy load and energy generation are at least partly balanced by the energy storage entity, said system comprising controlling means, connected to the energy storage entity, operable to control charging and/or discharging power rates of the energy storage entity according to a control function dependent of at least one operational parameter including the state-of-charge, wherein said energy storage entity is adapted to provide at least three operational states including a charging oriented state, a discharging oriented state, and a neutral state, for balancing and wherein the charging oriented state is defined such that the controlled discharging power rate is below the maximum discharging power rate and wherein the controlled charging power rate is equal to the maximum charging power rate, and wherein the discharging oriented state is defined such that the controlled charging power rate is below the maximum charging power rate and wherein the controlled discharging power rate is equal to the maximum discharging power rate.

According to claim 11 the energy storage system is characterized in that the neutral state is represented by a single SOC-turn point, wherein the SOC-turn point is defined as control point at which a power rate changes its behaviour from the maximum power rate to a state of charge function based on a certain energy storage information, wherein the single SOC-turn point is defined such that the controlled discharging power rate equals the maximum discharging power rate and the controlled charging power rate equals the maximum charging power rate, or is represented by an overlapping region of the charging oriented state and the discharging oriented state, said overlapping region defined by SOC-turn points of the charging and discharging oriented state, and wherein operation periods are defined and the SOC-turn points are selected according to the usage of the energy storage entity during the next operation period, and wherein the energy storage entity is controlled such that the neutral state as operational state for the energy storage entity is preferred.

According to the invention it has been recognized that by controlling the charging and/or discharging power rates of the energy storage entity an efficient balancing is provided.

According to the invention it has been further recognized that performance is increased of the energy storage entity, in particular of a battery operated energy storage entity: The number of charging and discharging cycles can be reduced as well as the time in which the energy storage entity is in stress rating situations.

According to the invention it has been further recognized that costs for operating the energy storage entity are reduced.

According to the invention it has been even further recognized that a flexible and easy implementation of the method respectively the system is enabled.

Operational parameters are defined as parameters preferably influencing the control function affecting the efficiency of the energy storage entity. Examples for such parameters are temperature of the energy storage entity, number and periods of fluctuations of load and/or generation, number of charging cycles performed, time, outdoor weather conditions.

Further features, advantages and preferred embodiments are described in the following subclaims.

According to a further preferred embodiment charging and/or discharging of the energy storage entity is performed so that the energy stored in the energy storage entity is equal or greater than a predetermined percentage, preferably 50%, of the maximum storage capacity of the energy storage entity on average. This enables in a flexible way to perform a charging and/or discharging and reduces an operation of the energy storage entity in stress mode, in particular when the storage capacity is below 5% of the maximum storage capacity or is greater than 95% of the maximum storage capacity.

According to a further preferred embodiment the control function is a non-linear function of time and/or of the state-of-charge of the energy storage entity. This enables an even more flexible balancing and use of the energy storage entity based on realistic time dependent power rates during charging and/or discharging. At least three operational states are provided by the energy storage entity, including a charging oriented state, a discharging oriented state, and a neutral state, wherein the charging oriented state is defined such that the controlled discharging power rate is below the maximum discharging power rate and wherein the controlled charging power rate is equal to the maximum charging power rate, the discharging oriented state is defined such that the controlled charging power rate is below the maximum charging power rate and wherein the controlled discharging power rate is equal to the maximum discharging power rate and the neutral state is defined such that the controlled discharging power rate equals the maximum discharging power rate and the controlled charging power rate equals the maximum charging power rate. This enables a flexible while easy control of the energy storage entity in particular if the energy storage entity is battery-based. Further a dynamic management of an electric local power grid can be provided by using operation-specific and state-of-charge-dependent power rates of the energy storage entity.

The neutral state is represented by a single value of energy storage information or by an overlapping region of the charging oriented state and the discharging oriented state. This enhances further the flexibility for charging and/or discharging of the energy storing entity for balancing. A further advantage is that for example when the energy storage entity is battery-based, the lifetime of the battery can be further increased since charging or discharging respectively the ranges of the states can be adapted in such a way that lifetime of the battery can be increased due to an adaption to the specific characteristics of the underlying battery, for example the battery-material like NiMH, etc..

According to a further preferred embodiment the controlled discharging power rate increases linearly with the energy storage information, preferably the state-of-charge, in the charging oriented state and/or the controlled charging power rate decreases linearly with the energy storage information, preferably the state-of-charge, in the discharging oriented state. This enables an easy energy storage information dependent control of the charging and discharging power rates. According to a further preferred embodiment the maximum of the charging power rate and the maximum of the discharging power rate are different from each other. This enables to take into account properties in charging and discharging. For example charging may be performed much quicker than discharging by the energy storage entity and thus flexibility is enhanced.

According to a further preferred embodiment the maximum of the power rates and/or the controlled charging and/or discharging power rates are adapted according to an actual state-of-health of the energy storage entity. This further enhances the flexibility and provides a more efficient balancing with the energy storage entity.

According to a further preferred embodiment power flow constrains of energy sources and/or energy loads are determined and a, preferably time-dependent, cost-function is provided representing the determined power flow constraints. This enables an effective balancing between load and generation of energy with respect to operational costs of the energy sources and/or the energy loads.

According to a further preferred embodiment the cost function is determined based on contract data between a grid operator and a segment operator of an energy distribution segment and/or grid with the energy storage entity and/or based on a physical parameter and/or based on operational costs of the respective grids and/or segments. Therefore, for example load balancing within an electrical local power grid segment can be performed more effectively, since costs may be further reduced. For example for representing physical parameters the cost function can be used by assigning to a certain "cost" certain physical parameters or values so that an overall optimization of charging and/or discharging of the energy storage entity for balancing is provided.

According to a further preferred embodiment the control function includes as parameters power flow constraints between energy sources and/or energy loads and/or between different segments of a power grid. This enables an even further increase in the efficiency of the energy storage entity when balancing.

According to a further preferred embodiment a power flow boundary range, preferably time-dependent, is applied for exceeding the power flow constraints on average. This enables to temporarily exceed power flow constraints to provide sufficient energy supply within for example a local power grid segment.

In the drawings

| | |
|---|---|
| Fig. 1 | shows a system according to a first embodiment of the present invention; |
| Fig. 2 | shows part of a method according to a second embodiment of the present invention, |
| Fig. 3 | shows part of a method according to a third embodiment of the present invention; |
| Fig. 4 | shows part of a method according to a fourth embodiment of the present invention; |
| Fig. 5 | shows a diagram representing battery cycles versus battery energy capacity for different power rates of a method according to a fifth embodiment of the present invention; |
| Fig. 6 | shows a diagram representing battery stress time versus battery energy capacity of a method according to a sixth embodiment of the present invention for different power rates; |
| Fig. 7a-7c | show typical diagrams for a load profile, a daytime renewable generation level and contract power over daytime; |
| Fig. 8a-8d | show contract deviations and state-of-charge changes for different schemes according to a further embodiment of a method according to the present invention and |
| Fig. 9a-9d | show performance comparisons between conventional methods and a method according to an embodiment of the present invention. |

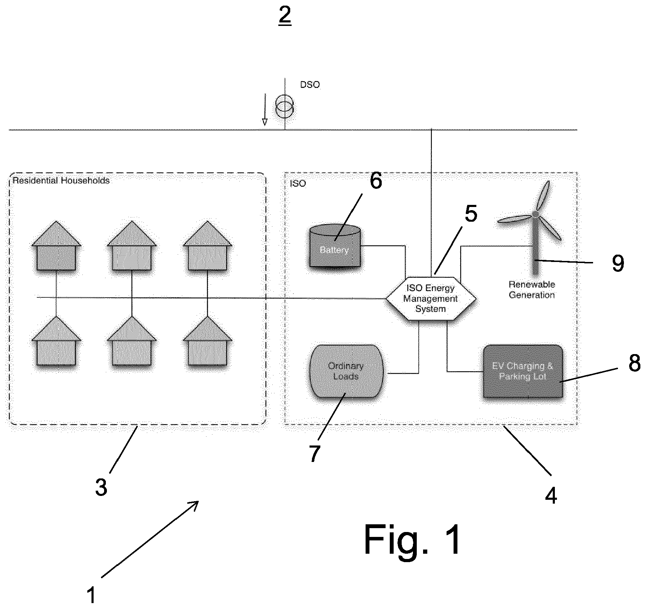

Fig. 1 shows a system according to a first embodiment of the present invention.

In Fig. 1 an electrical system comprising a power grid segment 1 of a medium or low voltage distribution grid is shown. This local power grid segment comprises local generation energy sources, like fluctuating and/or renewable energy generation sources 9, stochastic and/or dynamic loads like electric vehicle charging and parking lots 8, ordinary loads 7, as well as a local energy storage entity 6. In Fig. 1 the local power grid segment 1 is connected via a single point of connection to the main local distribution grid 2, which is controlled by a distribution system operator DSO. However, it might also be possible that the grid segment can be a specific network node in a distribution grid and may have multiple links. The local power grid segment 1 is controlled by a so-called independent system operator ISO represented by an ISO energy management system 5, which is in charge of serving the local power grid segment 1 with stable energy supply. Even further the local power grid segment 1 comprises further load sources, e.g. stochastic residential loads in form of residential households 3, which are also controlled by the independent system operator energy management system 5.

The independent system operator energy management system 5 has to link the demand request of the local power grid segment 1 to the upper global electrical energy distribution grid 2 respectively to the distribution system operator DSO with the planning of the needed power and balance with its local generation and demand/load pattern. A reliable planning may be result in a power flow contract for defined time interval, for example 15 min, 30 min, 1 hour or the like, enabling the distribution system operator DSO to more stable operation of its global electrical energy distribution grid which in turn decreases his operational costs. Such a power flow contract may apply cumulatively for all links between the local power grid segment and the upper global electric energy distribution grid 2.

In particular when an energy storage entity 6 in form of a battery has a fixed capacity size, the power balancing within the power contract between the independent system operator ISO and the distribution system operator DSO is highly dependent of the behavior of the stochastic loads and fluctuating sources which might cause contract violations resulting in higher operation costs for the independent system operator ISO. The ISO energy management system independent system operator 5 tries to control all energy resource components to keep the local power grid segment 1 in balance with the established power contract, i.e. or as a more general term power constraint for the load balancing.

For the operation of the independent system operator by the independent system operator energy management system 5 the state-of-charge of the battery 6 is determined. The state of charge SOC is preferably a function of time during the operation of the battery 6. Depending on the residual fluctuations of the energy resources, the battery 6 as an example for an energy storage entity is operated in charging or discharging mode in order to fulfill the contract, i.e. the state of charge is time dependent. The independent system operator energy management system 5 tries to maintain the battery 6 partially charged at all times. The term "at all times" means that for a short time a temporal violation of this aim may be tolerated, however, on average the battery 6 is always partially charged.

In contrast to conventional methods and systems which switch between the discharging mode and the charging mode by a battery management system, the system of Fig. 1 operates the battery 6 respecting dynamic power rate functions distinct from the nominal maximum power rates such that the power rates for charging and discharging are defined as function of a plurality of parameters $p\_n$ varying with time defining the power rate functions $P=P (p\_n) t(t)$. Preferably a non-linear time dependent function of desirable usage in the charging mode as well as in the discharging mode is used.

In particular the dynamic power rates can be deployed respecting the power rates as function from the state-of-charge SOC, P=P (SOC, t), whereby the power rate functions for the charging mode defined as P_char (SOC, t) and discharging mode defined as P_dis (SOC, t) may be different in time, different in P_SOC_max and SOC-dependency.

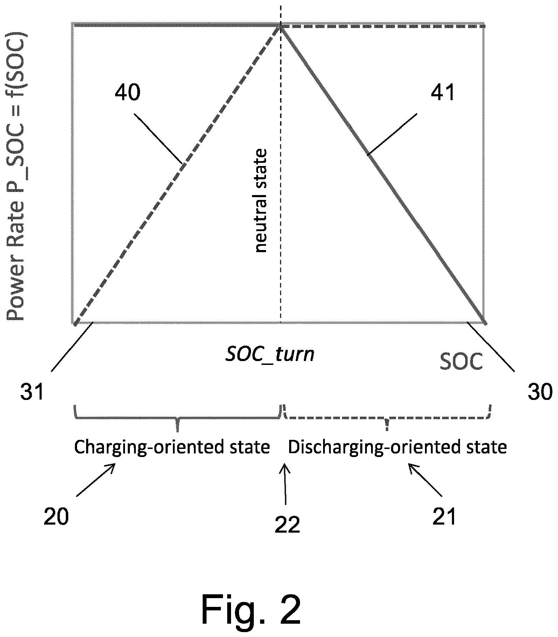

Fig. 2 shows part of a method according to a second embodiment of the present invention.

In Fig. 2 an example function for a state-of-charge dependent power rate is shown. The SOC-turn point is a defined control point, at which the power rate changes its behavior from the maximum power rate to a state-of-charge dependent function, whereby the SOC-turn charging point does not need to be equal to the SOC_turn discharging point. For example the turning point of the state of charge SOC between charging and discharging mode denoted with SOC_turn is fixed in a well defined power rating scheme. Within the range SOC < SOC_turn the battery is in a charging-oriented state and within the range SOC > SOC_turn the battery is in a discharging oriented state. When the state-of-charge SOC equals SOC_turn the battery is neutral. This is shown in Fig. 2. The SOC_turn value is denoted with reference sign 22, the charging-oriented state is denoted with reference sign 20 and the discharging-oriented state is denoted with reference sign 21. On the vertical axis the power rate P_SOC 31 as the function of the state of charge SOC rate 30 is shown in Fig. 2. In the charging-oriented state 20 a maximum charging power 30 may be applied from a state of charge SOC 30 from 0% till the state of charge turning point SOC_turn and a linearly decreasing maximum charging power from the maximum of the charging power rate to 0 between the state of charge turning point SOC_turn 22 and the 100% state of charge SOC 30. This curve is denoted with reference sign 41. The linearly decreasing maximum charging power is assigned to the discharging-oriented state 21. Vice versa in the charging-oriented state 20 the maximum discharging power rate 40 is linearly increasing from 0% state of charge SOC 30 until the state of charge turning point SOC_turn 22 up to the maximum discharging power rate. From the state of charge turning point SOC_turn 22 till the 100% state of charge SOC 30 the discharging power rate is applicable at its maximum. This curve is denoted with reference sign 40. To summarize in the charging-oriented state 20 the power rate equals the maximum charging power rate and has a linearly increasing discharging power rate $\hat{P}^-_{\max}(t)$ wherein in the discharging-oriented state 21 the maximum charging power is linearly decreasing whereas the discharging power rate is the maximum discharging power rate.

In particular operation-specific and SOC-dependent power rates $\hat{P}^-_{\max}(t)$ and $\hat{P}^+_{\max}(t)$, called virtual maximum energy storage entity power rates, $\hat{P}^-_{\max}(t)$ and $\hat{P}^+_{\max}(t)$ may defined as follows:

$$\hat{P}^-_{max}(t) = \begin{cases} P^-_{max} & \text{if } 0 \le SOC(t) \le SOC^-_{turn} \\ P^-_{max}f_- & \text{if } SOC^-_{turn} \le SOC(t) \le 1 \end{cases}$$

$$\hat{P}^+_{max}(t) = \begin{cases} P^+_{max}f_+ & \text{if } 0 \le SOC(t) \le SOC^+_{turn} \\ P^+_{max} & \text{if } SOC^+_{turn} \le SOC(t) \le 1 \end{cases}$$

where f_ and f_+ are control functions, the value of which is dependent on the current state-of-charge SOC of the energy storage entity, and $SOC^-_{turn}$ and $SOC^+_{turn}$ $(SOC^-_{turn} \ge SOC^+_{turn})$ are two SOC values at which the values of $\hat{P}^-_{\max}(t)$ and $\hat{P}^+_{\max}(t)$ start being affected by f_ and f_+ respectively.

f_ and f_+ may be defined with regard to the underlying system, e.g. the following rules may be applied:

1) f_ decreases and f_+ increases as SOC increases;

2) $f_- = 1$ when $SOC(t) = SOC^-_{turn}$, and f_+ = 1 when $SOC(t) = SOC^+_{turn}$;

3) f_ = 0 when SOC(t) = 100% and f_+ = 0 when SOC(t) = 0%.

An example of f_+ and f_ satisfying these rules can be found as follow:

$$f_- = 1 - \left( \frac{SOC(t) - SOC^-_{turn}}{1 - SOC^-_{turn}} \right)^K$$

$$f_+ = 1 - \left( \frac{SOC_{turn}^+ - SOC(t)}{SOC_{turn}^+} \right)^K$$

where K > 0.

With $f_-$ and $f_+$ defined as such three operation states of the energy storage entity 6, called charging-oriented state, neutral state and discharging-oriented state, are defined as follows: When $SOC(t) < SOC_{turn}^+$, the energy storage entity 6 is said to have entered charging-oriented state. In this state, the virtual maximum discharging rate is less than the physical maximum discharging rate, while the virtual maximum charging rate equals the physical maximum charging rate. Hence, it is easier to charge the energy storage entity 6 but harder to discharge it when it is in charging-oriented state.

When $SOC_{turn}^+ \leq SOC(t) \leq SOC_{turn}^-$ the energy storage entity 6 is said to have entered neutral state. In this state, the virtual maximum rates equal to their respective physical maximum rates. Hence, it is equally easy to both charge and discharge the energy storage entity 6 when it is in neutral state.

When $SOC(t) > SOC_{turn}^-$, the energy storage entity 6 is said to have entered discharging oriented state. In this state, the virtual maximum charging rate is less than the physical maximum charging rate, while the virtual maximum discharging rate equals the physical maximum discharging rate. Hence, it is easier to discharge the energy storage entity 6 but harder to charge it when it is in discharging-oriented state.

It can be observed that, during operations, it may be easier to drive the energy storage entity 6 into the neutral state, thus giving the central controller a tendency to keep the energy storage entity 6 within this state. The selection of $f_-$, $f_+$, $SOC_{turn}^-$ and $SOC_{turn}^+$ determines how strong such tendency is.

The selection of $f_-$ and $f_+$ may be dependent on an operator's perspectives over the underlying power grid. These two functions may be fixed once an energy storage entity 6 is installed. On the other hand, the selection of $SOC_{turn}^-$ and $SOC_{turn}^+$ may be determined by the operator's perspective about energy storage entity 6 usage during the next operation period. They can be changed during the planning process, and may be fixed during each operation period. After all, it is preferred to set $SOC_{turn}^- = SOC_{turn}^+ = SOC_{turn} = 50\%$ for most situation, since such a configuration indicates a balance in charging and discharging the energy storage entity 6 as well as an intentions to hold the energy storage entity 6 close to 50% SOC.

In Fig. 2 a simple case with $SOC_{turn}^- = SOC_{turn}^+ = SOC_{turn} = 50\%$ and $f_-$ and $f_+$ defined as follows

$$f_- = 1 - \left( \frac{SOC(t) - SOC_{turn}}{1 - SOC_{turn}} \right)$$

$$f_+ = 1 - \left( \frac{SOC_{turn} - SOC(t)}{SOC_{turn}} \right)$$

is shown.

Fig. 3 shows part of a method according to a third embodiment of the present invention.

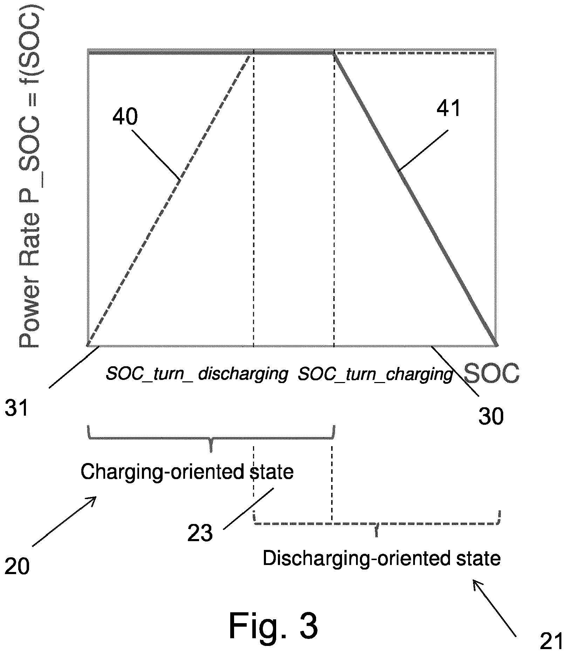

In Fig. 3 a further example for a state of charge dependent power rate is shown. In contrast to Fig. 2 there is no common state of charge_turn point for the charging and discharging power rate but a specific discharging point SOC_turn_discharging different from the SOC_turn_charging point. Therefore, the charging oriented state 20 and the discharging oriented state 21 have an overlapping region 23 in which the discharging power rate 40 and the charging power rate 41 are at their respective maximums. The discharging power rate 40 increases linearly from a 0% state of charge SOC until 100% at the discharging turning point SOC_turn_discharging and has the respective maximum power rate between the turning point SOC_turn_discharging and SOC_turn_charging and further from the SOC_turn_charging point to a 100% state of charge SOC. The charging power rate curve 41 is at its maximum from the 0% state of charge SOC via the SOC_turn_discharging turning point up to the charging turning point SOC_turn_charging and decreases then linearly to a power rate P_SOC = 0 at a state of charge of 100%.

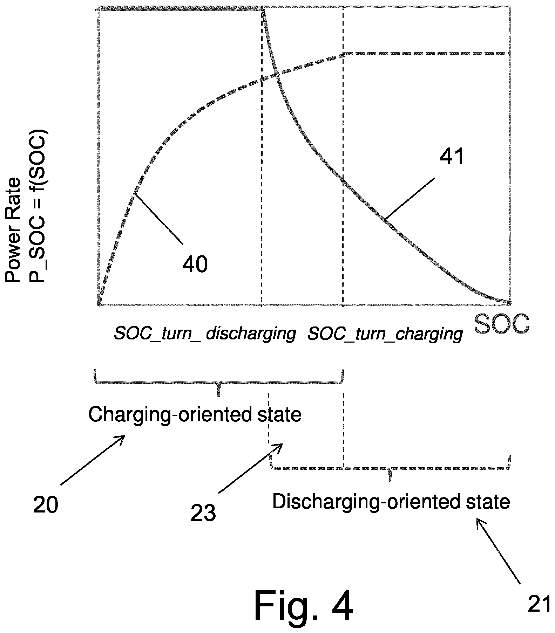

Fig. 4 shows part of a method according to a fourth embodiment of the present invention.

In Fig. 4 another example for a state of charge dependent power rate function is shown. Similar to Fig. 3 the discharging turning point SOC_turn_discharging and the charging turning point SOC_turn_charging are different from each other. The charging power rate curve 41 is at its maximum from 0% state of charge SOC up to the discharging turning point SOC_turn_discharging and decreases then non-linearly to a power rate P_SOC = 0 at a state of charge of 100%. The power rate discharging curve 40 increases non-linearly until a maximum reached at the charging turning point SOC_turn_charging. However, this maximum is below the maximum of the charging power rate. Therefore the power rate discharging curve 40 and the charging power rate 41 have only one point of intersection which is in the overlapping region 23 of the charging-oriented state 20 and the discharging oriented state 21 and which is below the maxima of the charging power rate and of the discharging power rate.

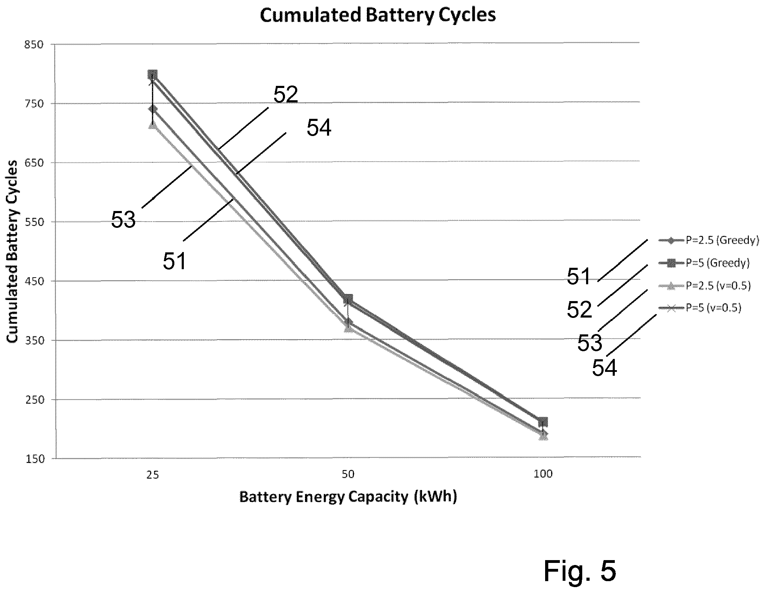

Fig. 5 shows a diagram representing battery cycles versus battery energy capacity for different power rates of a method according to a fifth embodiment of the present invention.

In Fig. 5 the interplay between power rate at charging and discharging mode and its relation to the available storage capacity of a battery is shown. The different curves 51-54 show cumulated battery cycles over a battery energy capacity. The curves 51 and 52 are based on a conventional charging and discharging scheme whereas the curves 53 and 54 use a charging/discharging scheme with a SOC_turn value of 50% according to Fig. 2. The curves 51 and 53 have a maximum power rate of 2,5 kW and the curves 52 and 54 are rated at a maximum power rate of 5 kW. As it can be seen from Fig. 5 the curve 53 is below curve 51 and curve 54 is below curve 52. Therefore the respective cumulated battery cycles are higher for the conventional charging/discharging scheme compared with the embodiment according to the present invention.

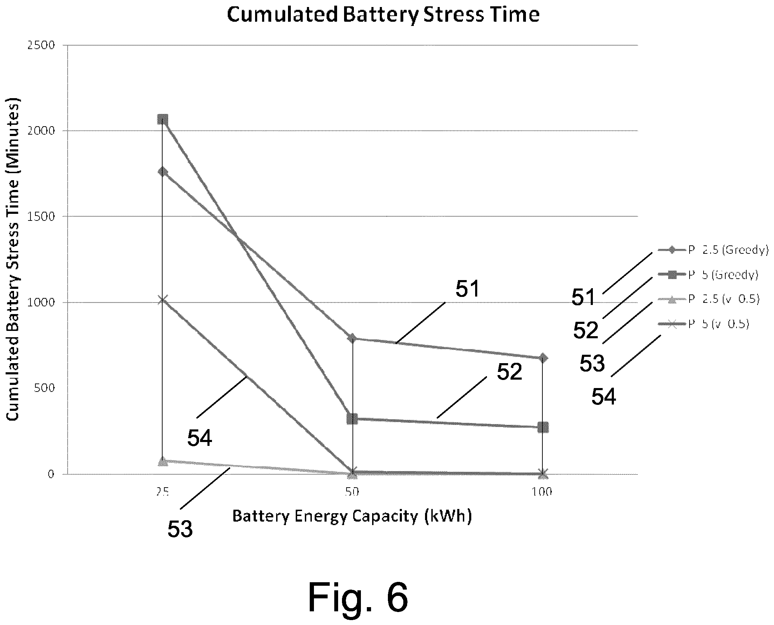

Fig. 6 shows a diagram representing battery stress time versus battery energy capacity of a method according to a sixth embodiment of the present invention for different power rates.

In Fig. 6 the cumulated battery stress time in minutes is shown dependent of the battery energy capacity. The curves 51-54 correspond to those in Fig. 5. As it can be seen from Fig. 6 the cumulated battery stress time in minutes is significantly higher for the conventional charging/discharging schemes represented by curves 51 and 52 than those according to the embodiment of the present invention, represented by the curves 53 and 54. By using the state of charge-dependent operational control performance increase to the battery operation is gained by the reduction of battery cycles (see Fig. 5) and by reducing the time in which the battery is in the stress rating situations, as shown in Fig. 6.

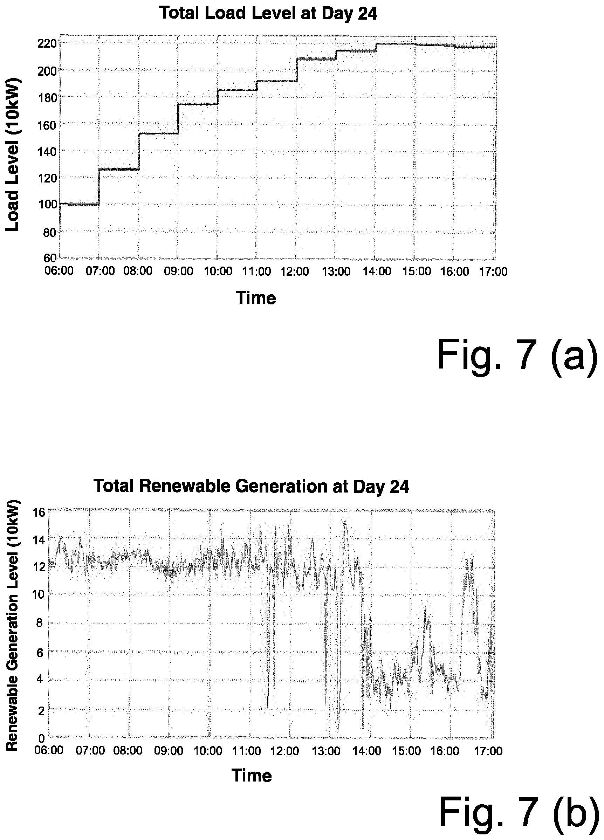

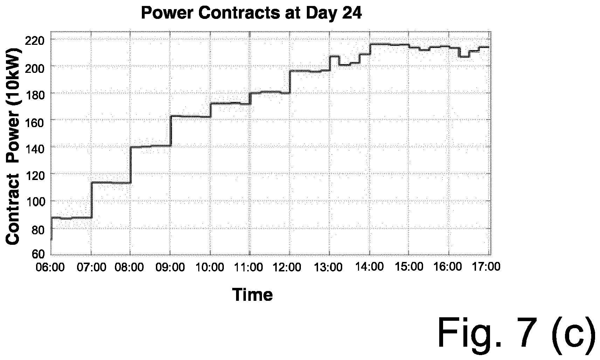

Fig. 7a-7c show typical diagrams for a load profile, a daytime renewable generation level and contract power over daytime.

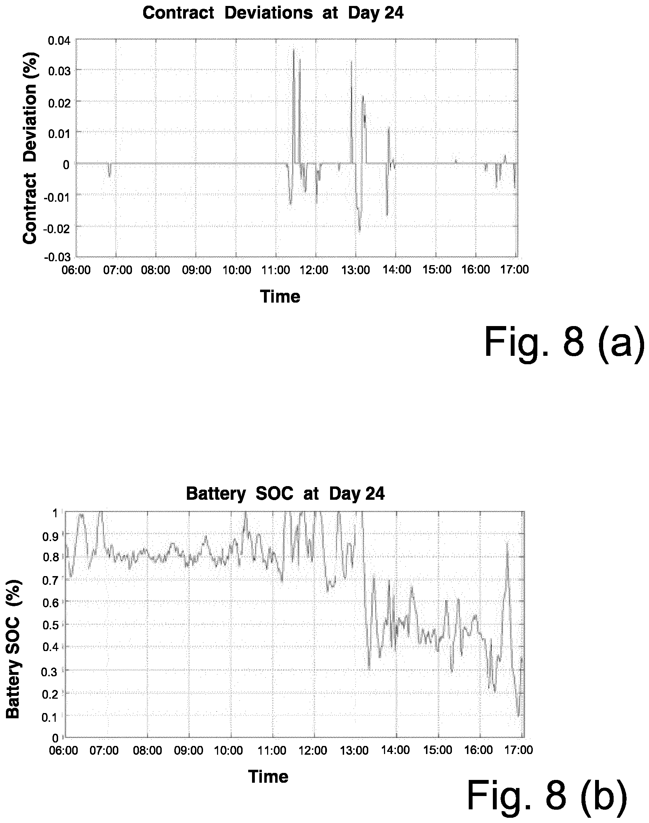

Fig. 8a-8d show contract deviations and state-of-charge changes for different schemes according to a further embodiment of a method according to the present invention.

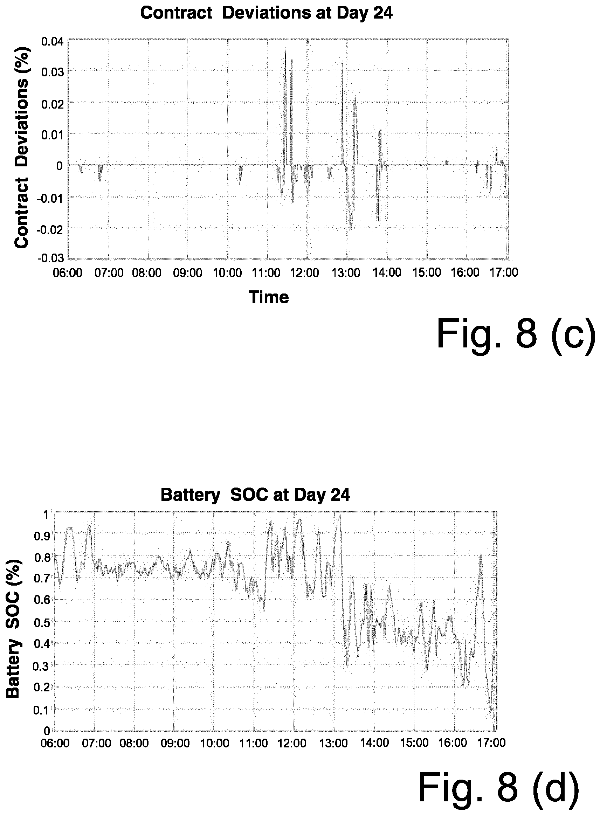

In Fig. 7a-c show a load profile, renewable generation levels, and 15-minute contracts for a particular day, for the time interval of 06:00 to 17:00 are shown. Fig. 8 shows the contract deviations and the change of the state-of-charge SOC of the energy storage entity 6 using a conventional management scheme and using a dynamic management scheme according to an embodiment of the present invention respectively.

When comparing Fig. 8a with Fig. 8c, it can be observed that at around time 06:15, there is a 0,2% under-commission under dynamic management scheme whereas the conventional scheme manages to reduce this deviation to 0. This is because, as shown in Fig. 8b and 8d, when the over-generation at this time occurs, the state-of-charge SOC under both conventional scheme and dynamic scheme is around 80%. The amount of energy that the dynamic allows the energy storage entity 6 to absorb is only 40% of that the conventional scheme does. However, since the conventional scheme allow the energy storage entity 6 to take up too much energy, its SOC climbs up to the stress range very quickly at time 06:25 and 06:50, whereas the dynamic scheme manages to keep the energy storage entity 6 stay at safer SOC zones. Bearing this merit of saving the energy storage entity 6 from entering stress, as shown in Fig. 8a with 8c, very marginal performance is lost under the dynamic management scheme for this time period.

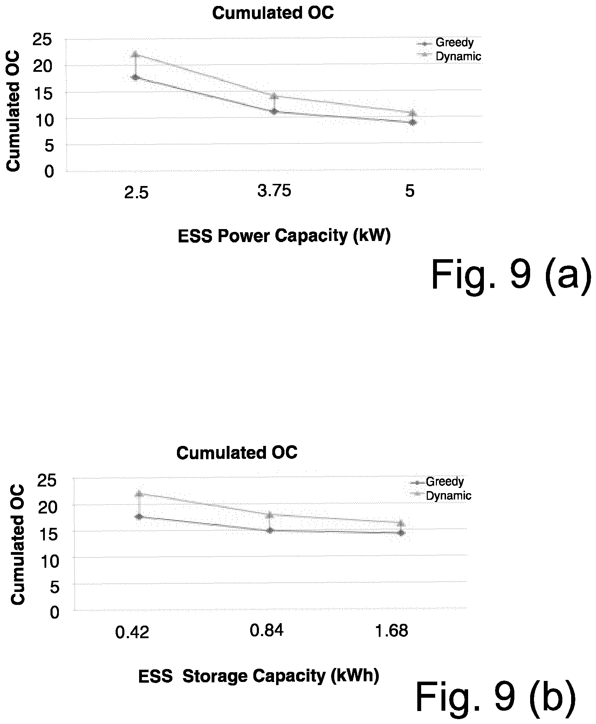

Fig. 9a-9d show performance comparisons between a conventional method and a method according to an embodiment of the present invention.

For a setup according to Fig. 1, i.e. the local power grid segment is managed by the independent service operator ISO who owns the battery 6, the small-scale wind turbine 7, e.g. several solar panels, this ISO serve electricity to a small number of households 3 and a small commercial building via purchasing contract-based electricity from distribution service operators DSO as well as local generations.

It is assumed as an example in the following that the households bring along 100 kW loads and the commercial building generates 150 kW demand at their respective peak hours. The hourly load level are generated based on California summer residential and commercial load profiles as provided in R.E. Brown and J.G. Koomey, "Electricity use in California: Past trends and present usage patterns", 2002, available: http://enduse.lbl.gov/Projects/CAdata.html. The electric vehicle (EV) charging and parking lot shown in Fig. 2 is disregarded in the following. The installed solar generation capacity is set to 10 kW and the installed wind generation capacity to 15 kW. The per-minute renewable generation data are obtained here from Nation Renewable Energy Laboratory (NREL), see: http://www.nrel.gov for the entire July of 2012 and then scaled to the underlying system specifications. The installed energy storage entity 6 is rated at 0,42 kWh/2,5 kW. Such a rating may be randomly selected but significantly under-provisioned value.

It is further assumed that the ISO renews the electricity contracts with the DSO by the end of every 15 minutes. It is calculated by the predicted total load level minus the predicted total renewable generation for the next 15 minutes. Since the energy storage entity 6 is very small, its effects on the contracts are neglected. In addition it is assumed the predictions on load and renewable generations are always accurate and the loads are constant over each hour.

Since the local load level is quite low, it is also assumed that all ancillary services are provided by DSO and upper hierarchies. In addition, only active power is considered. Hence the only job of the ISO is to serve the local electricity demands and minimize the deviation between the actual power flows from DSO and their contract values at any time instance. In running the simulation the control cycle of the ISO is set to be 1 minute. In other words, at the beginning of each minute, the following problem is solved by the ISO controller:

$$\text{min.} \quad |P_{dso}(t) - P_{con}(t)|$$

$$\text{s.t.} \quad \begin{cases} P_{ren}(t) + P_{ess}(t) + P_{dso}(t) = L(t) \\ -\hat{P}_{max}^{in}(t) \le P_{ess}(t) \le \hat{P}_{max}^{out}(t) \end{cases}$$

where $P_{dso}(t)$ is the committed power flow between ISO and DSO to be determined, $P_{con}(t)$ is the contract power value, L(t) is the current total ISO load level, Pren(t) is the total local renewable generation level at ISO, and Pess(t) is the power flow required from the energy storage entity 6 ($P_{ess}(t)$ takes positive values while the energy storage entity 6 is delivering power and negative values while the energy storage entity 6 is absorbing power).

In the real world, the energy storage entity 6 may be configured to respond only to contract deviations with magnitude higher than a dead-band value, say, 4%. However, the energy storage entity 6 is to balance every deviation.

The results of the simulation show that, although some balancing capabilities of the energy storage entity 6 are lost, the battery stress time is significantly reduced.

To evaluate the results, the performance metrics used in the simulation are defined as follows:
Total energy storage entity 6 stress time $\delta t_s$: In our simulation the energy storage entity 6 is under stress, when its SOC is greater than 95% or less than 5%. $t_s$ is calculated by counting the number of minutes that the energy storage entity 6 is under stress over the total simulation time.

Cumulated contract over-commissions, $e_{oc}$, is calculated as follows:

$$e_{oc} = \int_0^\infty \delta(t) \left| \frac{P_{dso}(t) - P_{con}(t)}{P_{con}(t)} \right| dt$$

where

$$\delta(t) = \begin{cases} 1 & \text{if } P_{dso}(t) > P_{con}(t) \\ 0 & \text{otherwise} \end{cases}$$

The $e_{oc}$ value defined in the formula measures how much the ISO violates its contracts with DSO by consuming more power than expected. It is worth nothing that $e_{oc}$ is measured instead of total contract deviations over time because the penalty for over-commissions may be significantly higher than the other way round.

Five simulation sets with energy storage entity 6 rated at 0,42 kWh/2,5 kW, 0,42 kW/h/3,75 kW, 0,42 kWh/5kW, 0,84 kWh/2,5 kW and 1,68 kWh/2,5 kW respectively are run. For each simulation the performance of the dynamic energy storage entity 6 management scheme with the conventional management scheme is compared.

Fig. 9a and Fig. 9b compare the $e_{oc}$ values for the conventional scheme against the dynamic scheme under different energy storage entity 6 characteristics. It can be seen that for either schemes, $e_{oc}$ decreases as the energy storage entity 6 takes higher $E_{act}$ or higher $P_{stor}$. However, higher power rating has stronger impacts on reducing $e_{oc}$ values than higher storage rating under the system.

Generally speaking, the conventional scheme exhibits stronger effects in reducing the cumulated $e_{oc}$ value, or, in other words, has stronger effects on balancing the renewable generations, than the dynamic scheme. However, the difference slowly converges to zero as we increase the energy storage entity storage and power capacities.

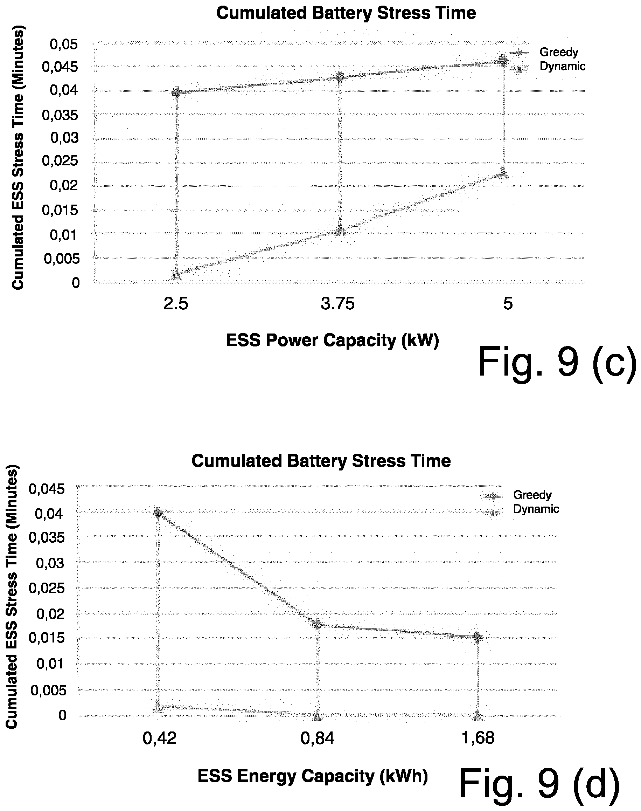

Fig. 9c and Fig. 9d show that the dynamic scheme generates significantly less $\delta t_s$ than the conventional scheme.

The difference also converges to zero due to the fact that if a large enough energy storage entity 6 is installed, it is possible that the SOC of the energy storage entity 6 never falls outside the "safe boundaries". Besides, it can be observed that $\delta t_s$ increases as the energy storage entity 6 takes larger power capacities, which makes it easier for the energy storage entity 6 to get depleted or full. Similarly, $\delta t_s$ decreases as the energy storage entity 6 takes larger storage capacities.

In summary the present invention enables power rate control for charging and discharging mode with a defined deterministic function of system parameters in time distinct for charging and discharging mode. The present invention enables further power rate control as function of the state of charge and time, distinct for charging and discharging modes as well as with a fixed state of charge turn point, distinct for charging and discharging modes, defined by individual, possibly different, parameter pairs of the maximum state of charge power rate and the state of charge turn point for the power rate.

The present invention increases the lifetime of battery-based energy storages in particular by a reduction of battery cycle numbers and by reduction of operation in battery stress mode.

The present invention is suitable in particular under the distributed energy generation in the distribution grids, where a local generation penetration is increasing to a comparable level of distributed small-scaled loads and may be considered in isolated as well as grid-connected modes.

The present invention is in particular applicable respectively can be used in sub-grids of hierarchical energy networks, in micro grids, for building energy systems, preferably home energy systems or in other words the present invention can be used or is applicable as storage system for resource handling on fluctuating resources, e.g. generation/sources, loads and/or a combination of generation and load.

The present invention enables - depending on the system size and characteristics in load and renewable - preferably a compromise of the battery operation costs against the system overall costs, i.e. for example contract violation costs versus battery size. This might depend on the economic constrains and possible other load balancing schemes in the same local power grid segment.

## Claims

1. A method for operating an energy storage entity (6), preferably a battery-based energy storage entity (6), wherein the energy storage entity (6) is connected to at least one energy load (7, 8) and at least one energy source (9), wherein energy fluctuations including fluctuations in energy generation of the energy source (9) and/or in energy load and/or disbalances between energy load (7, 8) and energy generation (9) are at least partly balanced by the energy storage entity (6)
wherein
for balancing charging and/or discharging power rates of the energy storage entity (6) are controlled according to a control function dependent of at least one operational parameter including the state-of-charge (SOC),
wherein at least three operational states are provided by the energy storage entity (6), including a charging oriented state (20), a discharging oriented state (21), and a neutral state (22, 23),
wherein
the charging oriented state (20) is defined such that the controlled discharging power rate (40) is below the maximum discharging power rate and wherein the controlled charging power rate (41) is equal to the maximum charging power rate, the discharging oriented state (21) is defined such that the controlled charging power rate (41) is below the maximum charging power rate and wherein the controlled discharging power rate (40) is equal to the maximum discharging power rate,
**characterized in that**
the neutral state (22, 23) is represented by a single SOC-turn point, wherein the SOC-turn point is defined as control point at which a power rate changes its behaviour from the maximum power rate to a state of charge function based on a certain energy storage information,
wherein the single SOC-turn point is defined such that the controlled discharging power rate (40) equals the maximum discharging power rate and the controlled charging power (41) rate equals the maximum charging power rate,
or the neutral state (22, 23) is represented by an overlapping region of the charging oriented state and the discharging oriented state, said overlapping region defined by SOC-turn points of the charging and discharging oriented state, wherein the charging and discharging oriented SOC-turn points are different from each other, periods are defined and the SOC-turn points are selected according to the usage of the energy storage entity during the next operation period,
and wherein the energy storage entity is controlled such that the neutral state as operational state for the energy storage entity is preferred.

**2.** The method according to claim 1, **characterized in that** charging and/or discharging of the energy storage entity (6) is performed so that the energy stored in the energy storage entity is equal or greater than a predetermined percentage, preferably 50%, of the maximum storage capacity of the energy storage entity (6) on average.

**3.** The method according to one of the claims 1-2, **characterized in that** the control function is a non-linear function of time and/or of the state-of-charge (SOC) of the energy storage entity (6).

**4.** The method according to one of the claims 1-2, **characterized in that** the controlled discharging power rate (40) increases linearly with the energy storage information, preferably the state-of-charge (SOC), in the charging oriented state (20) and/or the controlled charging power rate (41) decreases linearly with the energy storage information, preferably the state-of-charge (SOC), in the discharging oriented state (21).

**5.** The method according to one of the claims 1-4, **characterized in that** the maximum of the charging power rate and the maximum of the discharging power rate are different from each other.

**6.** The method according to one of the claims 1-5, **characterized in that** the maximum of the power rates and/or the controlled charging and/or discharging power rates (40, 41) are adapted according to an actual state-of-health of the energy storage entity (6).

**7.** The method according to one of the claims 1-6, **characterized in that** the power flow constraints are represented by a, preferably time-dependent, cost-function.

**8.** The method according to claim 7, **characterized in that** the cost-function is based on contract data between a grid operator and a segment operator of an energy distribution segment and/or grid with the energy storage entity (6) and/or based on a physical parameter and/or operational costs of the respective grids and/or segments.

**9.** The method according to one of the claims 1-8, **characterized in that** the control function includes as parameters power flow constraints between energy sources (9) and/or energy loads (7, 8) and/or between different segments of a power grid.

**10.** The method according to claim 9, **characterized in that** a power flow boundary range, preferably time-dependent, is applied for exceeding the power flow constraints on average.

**11.** An energy storage system, to perform the method according to one of the claims 1-10, with an energy storage entity (6), preferably a battery-based energy storage entity (6), wherein the energy storage entity (6) is connected to at least one energy load (7, 8) and at least one energy source (9), wherein energy fluctuations including fluctuations in energy generation of the energy source and/or in energy load (7, 8) and/or disbalances between energy load and energy generation (9) are at least partly balanced by the energy storage entity (6) said system comprising controlling means (5), connected to the energy storage entity (6), operable to control charging and/or discharging power rates of the energy storage entity (6) according to a control function dependent of at least one operational parameter including the state-of-charge (SOC), wherein said energy storage entity is adapted to provide at least three operational states including a charging oriented state (20), a discharging oriented state (21), and a neutral state (22, 23), for balancing and wherein
the charging oriented state (20) is defined such that the controlled discharging power rate (40) is below the maximum discharging power rate and wherein the controlled charging power rate (41) is equal to the maximum charging power rate, and wherein
the discharging oriented state (21) is defined such that the controlled charging power rate (41) is below the maximum charging power rate and wherein the controlled discharging power rate (40) is equal to the maximum discharging power rate,
**characterized in that**
the neutral state (22,23) is represented by a single SOC-turn point, wherein the SOC-turn point is defined as control point at which a power rate changes its behaviour from the maximum power rate to a state of charge function based on a certain energy storage information,
wherein the single SOC-turn point is defined such that the controlled discharging power rate (40) equals the maximum discharging power rate and the controlled charging power (41) rate equals the maximum charging power rate,
or is represented by an overlapping region of the charging oriented state and the discharging oriented state, said overlapping region defined by SOC-turn points of the charging and discharging oriented state,
and wherein operation periods are defined and the SOC-turn points are selected according to the usage of the energy storage entity during the next operation period, and wherein the energy storage entity is controlled such that the neutral state as operational state for the energy storage entity is preferred.

**Patentansprüche**

1.  Ein Verfahren zum Betreiben einer Energiespeicherentität (6), vorzugsweise einer batteriebasierten Energiespeicherentität (6), wobei die Energiespeicherentität (6) verbunden ist mit zumindest einer Energiesenke (7, 8) und zumindest einer Energiequelle (9), wobei Energiefluktuationen Fluktuationen bei der Energieerzeugung der Energiequelle (9) und/oder der Energiesenke umfassen und/oder Ungleichgewichte zwischen Energiesenke (7, 8) und Energieerzeugung (9) zumindest teilweise durch die Energiespeicherentität (6) ausgeglichen werden, wobei

    zum Ausgleichen Lade- und/oder Entladeleistungsraten der Energiespeicherentität (6) gesteuert werden gemäß einer Steuerungsfunktion, die von zumindest einem Betriebsparameter abhängt, umfassend den Ladungszustand (SOC),

    wobei zumindest drei Betriebszustände bereitgestellt werden durch die Energiespeicherentität (6), umfassend einen ladungsorientierten Zustand (20), einen entladungsorientierten Zustand (21) und einen neutralen Zustand (22, 23), wobei

    der ladungsorientierte Zustand (20) so definiert ist, dass die kontrollierte Entladeleistungsrate (40) unterhalb der maximalen Entladungsleistungsrate ist und wobei die kontrollierte Ladeleistungsrate (41) gleich der maximalen Ladeleistungsrate ist, der entladungsorientierte Zustand (21) so definiert ist, dass die kontrollierte Ladeleistungsrate (41) unterhalb der maximalen Ladeleistungsrate ist und wobei die kontrollierte Entladeleistungsrate (40) gleich der maximalen Entladeleistungsrate ist, **dadurch gekennzeichnet, dass**

    der neutrale Zustand (22, 23) durch einen einzelnen SOC-Wendepunkt repräsentiert ist, wobei der SOC-Wendepunkt definiert ist als ein Kontrollpunkt, an dem die Leistungsrate ihr Verhalten wechselt von der maximalen Leistungsrate zu einer Ladezustandsfunktion basierend auf einer gewissen Energiespeicherinformation, wobei der einzelne SOC-Wendepunkt so definiert ist, dass die kontrollierte Entladeleistungsrate (40) der maximalen Entladeleistungsrate entspricht und die kontrollierte Ladeleistungsrate (41) der maximalen Ladeleistungsrate entspricht, oder der neutrale Zustand (22, 23) repräsentiert ist durch einen Überlappungsbereich des ladungsorientierten Zustandes und des entladungsorientierten Zustandes, wobei der Überlappungsbereich definiert ist durch SOC-Wendepunkte des ladungs- und entladungsorientierten Zustandes,

    wobei die ladungs- und entladungsorientierten SOC-Wendepunkte sich voneinander unterscheiden, Perioden definiert werden und die SOC-Wendepunkte ausgewählt werden gemäß der Nutzung der Energiespeicherentität während der nächsten Betriebsperiode, und wobei die Energiespeicherentität so gesteuert wird, dass der neutrale Zustand als Betriebszustand für die Energiespeichereinheit bevorzugt wird.

2.  Das Verfahren gemäß Anspruch 1, **dadurch gekennzeichnet, dass** ein Laden und/oder Entladen der Energiespeicherentität (6) so durchgeführt wird, dass die Energie, die in der Energiespeicherentität gespeichert ist, gleich oder größer als eine vorbestimmte Prozentzahl, vorzugsweise 50 %, der maximalen Speicherkapazität der Energiespeicherentität (6) im Mittel ist.

3.  Das Verfahren gemäß einem der Ansprüche 1-2, **dadurch gekennzeichnet, dass** die Steuerungsfunktion eine nichtlineare Funktion der Zeit und/oder des Ladungszustandes (SOC) der Energiespeicherentität (6) ist.

4.  Das Verfahren gemäß einem der Ansprüche 1-2, **dadurch gekennzeichnet, dass** die kontrollierte Entladeleistungsrate (40) linear ansteigt mit der Energiespeicherinformation, vorzugsweise dem Ladungszustand (SOC), in dem ladungsorientierten Zustand (20) und/oder die kontrollierte Ladeleistungsrate (41) linear abfällt mit der Energiespeicherinformation, vorzugsweise dem Ladungszustand (SOC) in dem entladungsorientierten Zustand (21).

5.  Das Verfahren gemäß einem der Ansprüche 1-4, **dadurch gekennzeichnet, dass** das Maximum der Ladeleistungsrate und das Maximum der Entladeleistungsrate sich voneinander unterscheiden.

6.  Das Verfahren gemäß einem der Ansprüche 1-5, **dadurch gekennzeichnet, dass** das Maximum der Leistungsraten und/oder der kontrollierten Lade- und/oder Entladeleistungsraten (40, 41) angepasst werden an den aktuellen Gesundheitszustand der Energiespeicherentität (6).

7.  Das Verfahren gemäß einem der Ansprüche 1-6, **dadurch gekennzeichnet, dass** die Leistungsflussbeschränkungen repräsentiert werden durch eine vorzugsweise zeitabhängige Kostenfunktion.

8. Das Verfahren gemäß Anspruch 7, **dadurch gekennzeichnet, dass** die Kostenfunktion auf Vertragsdaten zwischen einem Netzbetreiber und einem Segmentbetreiber eines Energieverteilungssegments und/oder Netzes mit der Energiespeicherentität (6) basiert und/oder auf einem physikalischen Parameter basiert und/oder auf Betriebskosten der entsprechenden Netze und/oder Segmente.

9. Das Verfahren gemäß einem der Ansprüche 1-8, **dadurch gekennzeichnet, dass** die Steuerungsfunktion als Parameter Leistungsflussbeschränkungen zwischen Energiequellen (9) und/oder Energiesenken (7, 8) und/oder zwischen verschiedenen Segmenten eines Leistungsnetzes umfasst.

10. Das Verfahren gemäß Anspruch 9, **dadurch gekennzeichnet, dass** ein Leistungsfluss-Grenzbereich, vorzugsweise zeitabhängig, angewendet wird zum Überschreiten der Leistungsflussbeschränkungen im Mittel.

11. Ein Energiespeichersystem zur Durchführung des Verfahrens gemäß einem der Ansprüche 1-10, mit einer Energiespeicherentität (6), vorzugsweise einer batteriebasierten Energiespeicherentität (6), wobei die Energiespeicherentität (6) verbunden ist mit zumindest einer Energiesenke (7, 8) und zumindest einer Energiequelle (9), wobei Energiefluktuationen Fluktuationen bei der Energieerzeugung der Energiequelle und/oder der Energiesenke (7, 8) umfassen und/oder Ungleichgewichte zwischen Energiesenke und Energieerzeugung (9) zumindest teilweise durch die Energiespeicherentität (6) ausgeglichen werden, wobei besagtes System Steuermittel (5) umfasst, die mit der Energiespeicherentität (6) verbunden, und die ausgebildet sind zum Kontrollieren von Lade- und/oder Entladeleistungsraten der Energiespeicherentität (6) gemäß einer Steuerungsfunktion, die von zumindest einem Betriebsparameter abhängt, umfassend den Ladungszustand (SOC),
wobei die Energiespeicherentität ausgebildet, um zumindest drei Betriebszustände bereitzustellen, umfassend einen ladungsorientierten Zustand (20), einen entladungsorientierten Zustand (21) und einen neutralen Zustand (22, 23) zum Ausgleichen, und wobei
der ladungsorientierte Zustand (20) so definiert ist, dass die kontrollierte Entladeleistungsrate (40) unterhalb der maximalen Entladeleistungsrate ist und wobei die kontrollierte Ladeleistungsrate (41) gleich der maximalen Ladeleistungsrate ist, und wobei
der entladungsorientierte Zustand (21) so definiert ist, dass die kontrollierte Ladeleistungsrate (41) unterhalb der maximalen Ladeleistungsrate ist und wobei die kontrollierte Entladeleistungsrate (40) gleich der maximalen Entladeleistungsrate ist, **dadurch gekennzeichnet, dass**
der neutrale Zustand (22, 23) durch einen einzelnen SOC-Wendepunkt repräsentiert ist, wobei der SOC-Wendepunkt definiert ist als ein Kontrollpunkt, an dem die Leistungsrate ihr Verhalten wechselt von der maximalen Leistungsrate zu einer Ladezustandsfunktion basierend auf einer gewissen Energiespeicherinformation, wobei der einzelne SOC-Wendepunkt so definiert ist, dass die kontrollierte Entladeleistungsrate (40) der maximalen Entladeleistungsrate entspricht und die kontrollierte Ladeleistungsrate (41) der maximalen Ladeleistungsrate entspricht,
oder der neutrale Zustand (22, 23) repräsentiert ist durch einen Überlappungsbereich des ladungsorientierten Zustandes und des entladungsorientierten Zustandes, wobei der Überlappungsbereich definiert ist durch SOC-Wendepunkte des ladungs- und entladungsorientierten Zustandes,
und wobei Betriebsperioden definiert werden und die SOC-Wendepunkte ausgewählt werden gemäß der Nutzung der Energiespeicherentität während der nächsten Betriebsperiode, und wobei die Energiespeicherentität so gesteuert wird, dass der neutrale Zustand als Betriebszustand für die Energiespeicherentität bevorzugt wird.

## Revendications

1. Procédé de fonctionnement d'une entité de stockage d'énergie (6), de préférence une entité de stockage d'énergie par batterie (6), dans lequel l'entité de stockage d'énergie (6) est connectée à au moins une charge d'énergie (7, 8) et au moins une source d'énergie (9), dans lequel des fluctuations d'énergie incluant des fluctuations de génération d'énergie de la source d'énergie (9) et/ou de charge d'énergie et/ou des déséquilibres entre une charge d'énergie (7, 8) et une génération d'énergie (9) sont au moins en partie équilibrés par l'entité de stockage d'énergie (6)
dans lequel
pour équilibrer la charge et/ou la décharge des taux de puissance de l'entité de stockage d'énergie (6) sont commandés selon une fonction de commande dépendant d'au moins un paramètre opérationnel incluant l'état de charge (SOC),
dans lequel au moins trois états opérationnels sont prévus par l'entité de stockage d'énergie (6), incluant un état orienté charge (20), un état orienté décharge (21), et un état neutre (22, 23),
dans lequel
l'état orienté charge (20) est défini de sorte que le taux de puissance de décharge commandé (40) soit en dessous du taux de puissance de décharge maximal et dans lequel le taux de puissance de charge commandé (41) est égal au taux de puissance de charge maximal, l'état orienté décharge (21) est défini de sorte que le taux de puissance de charge commandé (41) soit en dessous du taux de puissance de charge maximal et dans lequel le taux de puissance de décharge commandé (40) est égal au taux de puissance de décharge maximal,

**caractérisé en ce que**

l'état neutre (22, 23) est représenté par un seul point de changement SOC, dans lequel le point de changement SOC est défini en tant que point de commande auquel un taux de puissance change son comportement du taux de puissance maximal à un état de fonction de charge d'après une certaine information de stockage d'énergie,

dans lequel le seul point de changement SOC est défini de sorte que le taux de puissance de décharge commandé (40) soit égal au taux de puissance de décharge maximal et le taux de puissance de charge commandé (41) soit égal au taux de puissance de charge maximal,

ou l'état neutre (22, 23) est représenté par une région de chevauchement de l'état orienté charge et de l'état orienté décharge, ladite région de chevauchement étant définie par des points de changement SOC de l'état orienté charge et décharge,

dans lequel les points de changement SOC orientés charge et décharge sont différents l'un de l'autre, des périodes sont définies et les points de changement SOC sont sélectionnés selon l'emploi de l'entité de stockage d'énergie pendant la période de fonctionnement suivante,

et dans lequel l'entité de stockage d'énergie est commandée de sorte que l'état neutre en tant qu'état opérationnel pour l'entité de stockage d'énergie soit préféré.

2. Procédé selon la revendication 1, **caractérisé en ce que** la charge et/ou la décharge de l'entité de stockage d'énergie (6) sont réalisées de sorte que l'énergie stockée dans l'entité de stockage d'énergie soit supérieure ou égale à un pourcentage prédéterminé, de préférence 50 %, de la capacité de stockage maximale de l'entité de stockage d'énergie (6) en moyenne.

3. Procédé selon l'une des revendications 1 et 2, **caractérisé en ce que** la fonction de commande est une fonction non linéaire de temps et/ou de l'état de charge (SOC) de l'entité de stockage d'énergie (6).

4. Procédé selon l'une des revendications 1 et 2, **caractérisé en ce que** le taux de puissance de décharge commandé (40) augmente linéairement avec l'information de stockage d'énergie, de préférence l'état de charge (SOC), dans l'état orienté charge (20) et/ou le taux de puissance de charge commandé (41) diminue linéairement avec l'information de stockage d'énergie, de préférence l'état de charge (SOC), dans l'état orienté décharge (21).

5. Procédé selon l'une des revendications 1 à 4, **caractérisé en ce que** le maximum du taux de puissance de charge et le maximum du taux de puissance de décharge sont différents l'un de l'autre.

6. Procédé selon l'une des revendications 1 à 5, **caractérisé en ce que** le maximum des taux de puissance et/ou les taux de puissance de charge et/ou de décharge commandés (40, 41) sont adaptés selon un état de santé réel de l'entité de stockage d'énergie (6).

7. Procédé selon l'une des revendications 1 à 6, **caractérisé en ce que** les contraintes de transit de puissance sont représentées par une fonction de coût, dépendant de préférence du temps.

8. Procédé selon la revendication 7, **caractérisé en ce que** la fonction de coût est basée sur des données de contrat entre un opérateur de réseau et un opérateur de segment d'un segment et/ou d'un réseau de distribution d'énergie avec l'entité de stockage d'énergie (6) et/ou d'après un paramètre physique et/ou des coûts opérationnels des réseaux et/ou segments respectifs.

9. Procédé selon l'une des revendications 1 à 8, **caractérisé en ce que** la fonction de commande inclut en tant que paramètres des contraintes de transit de puissance entre des sources d'énergie (9) et/ou des charges d'énergie (7, 8) et/ou entre des segments différents d'un réseau électrique.

10. Procédé selon la revendication 9, **caractérisé en ce qu'**une plage de limite de transit de puissance, dépendant de préférence du temps, est appliquée pour dépasser les contraintes de transit de puissance en moyenne.

11. Système de stockage d'énergie, pour réaliser le procédé selon l'une des revendications 1 à 10, avec une entité de stockage d'énergie (6), de préférence une entité de stockage d'énergie par batterie (6), dans lequel l'entité de stockage d'énergie (6) est connectée à au moins une charge d'énergie (7, 8) et au moins une source d'énergie (9), dans lequel des fluctuations d'énergie incluant des fluctuations de génération d'énergie de la source d'énergie (9) et/ou de charge d'énergie et/ou des déséquilibres entre une charge d'énergie (7, 8) et une génération d'énergie (9) sont au moins en partie équilibrés par l'entité de stockage d'énergie (6), ledit système comprenant un moyen de commande (5), connecté à l'entité de stockage d'énergie (6), opérationnel pour commander des taux de puissance de charge et/ou de décharge de l'entité de stockage d'énergie (6) selon une fonction de commande dépendant d'au moins un paramètre opérationnel incluant l'état de charge (SOC), dans lequel ladite entité de stockage d'énergie est adaptée pour prévoir au moins trois états opérationnels incluant un état orienté charge (20), un état orienté décharge (21), et un état neutre (22, 23), pour l'équilibre et dans lequel

l'état orienté charge (20) est défini de sorte que le taux de puissance de décharge commandé (40) soit en dessous du taux de puissance de décharge maximal et dans lequel le taux de puissance de charge commandé (41) est égal au taux de puissance de charge maximal,

et dans lequel

l'état orienté décharge (21) est défini de sorte que le taux de puissance de charge commandé (41) soit en dessous du taux de puissance de charge maximal et dans lequel le taux de puissance de décharge commandé (40) est égal au taux de puissance de décharge maximal,

**caractérisé en ce que**

l'état neutre (22, 23) est représenté par un seul point de changement SOC, dans lequel le point de changement SOC est défini en tant que point de commande auquel un taux de puissance change son comportement du taux de puissance maximal à un état de fonction de charge d'après une certaine information de stockage d'énergie,

dans lequel le seul point de changement SOC est défini de sorte que le taux de puissance de décharge commandé (40) soit égal au taux de puissance de décharge maximal et le taux de puissance de charge commandé (41) soit égal au taux de puissance de charge maximal,

ou est représenté par une région de chevauchement de l'état orienté charge et de l'état orienté décharge, ladite région de chevauchement étant définie par des points de changement SOC de l'état orienté charge et décharge,

et dans lequel des périodes de fonctionnement sont définies et les points de changement SOC sont sélectionnés selon l'emploi de l'entité de stockage d'énergie pendant la période de fonctionnement suivante,

et dans lequel l'entité de stockage d'énergie est commandée de sorte que l'état neutre en tant qu'état opérationnel pour l'entité de stockage d'énergie soit préféré.

Fig. 1

Fig. 2

EP 2 901 536 B1

EP 2 901 536 B1

Fig. 3

Fig. 4

Fig. 5

Fig. 6

**Total Load Level at Day 24**

Fig. 7 (a)

**Total Renewable Generation at Day 24**

Fig. 7 (b)

Power Contracts at Day 24

Fig. 7 (c)

**Contract Deviations at Day 24**

Fig. 8 (a)

**Battery SOC at Day 24**

Fig. 8 (b)

**Contract Deviations at Day 24**

Fig. 8 (c)

**Battery SOC at Day 24**

Fig. 8 (d)

**Cumulated OC**

Fig. 9 (a)

**Cumulated OC**

Fig. 9 (b)

Fig. 9 (c)

Fig. 9 (d)

**EP 2 901 536 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1642764 A1
- US 20120223670 A1

- US 20110291479 A1

**Non-patent literature cited in the description**

- **R.E. BROWN ; J.G. KOOMEY.** *Electricity use in California: Past trends and present usage patterns,* 2002, http://enduse.lbl.gov/Projects/CAdata.html